# EUROPÄISCHE PATENTANMELDUNG

(11) **EP 4 668 696 A1**
(43) Veröffentlichungstag der Anmeldung: **24.12.2025**
(21) Anmeldenummer: 25182559.2
(22) Anmeldetag: 13.06.2025
(51) Int. Cl.: H04L 43/0829, H04L 43/106, H04L 47/10, H04L 65/65

(54) **PASSIVES ÜBERWACHEN VON PAKETVERZÖGERUNG UND -VERLUST IN EINEM NETZWERK-SYSTEM**

(30) Priorität: 20.06.2024 DE 102024205718
(71) Anmelder: Siemens Mobility GmbH, 80997 München (DE)
(72) Erfinder: Pinkert, Tjeerd, 38118 Braunschweig (DE)
(74) Vertreter: Siemens Patent Attorneys

(57) **Zusammenfassung**

Es wird ein Computer-implementiertes Verfahren zum passiven Überwachen von Paketströmen (130) in einem Netzwerk (100) beschrieben, das Verfahren aufweisend:
i) Empfangen einer Vielzahl von Paketen (150), welche jeweils eine eindeutige Identifizierung, UID, aufweisen,
wobei die UIDs der Pakete (150) einer vorbestimmten UID-Reihenfolge entsprechen, und wobei zumindest ein UID-Zyklus (170) dieser UID-Reihenfolge verwendet wird; und
ii) Evaluieren der UIDs der empfangenen Pakete (150) dahingehend, ob die UID-Reihenfolge der empfangenen UIDs der vorbestimmten UID-Reihenfolge entspricht, hierbei:
iia) bei Feststellen, dass zumindest eine UID aus der vorbestimmten UID-Reihenfolge fehlt: Speichern der zumindest einen fehlenden UID (151) in einer Liste fehlender Pakete (160);
iib) bei Feststellen, dass zumindest eine UID nicht in die vorbestimmte UID-Reihenfolge passt: Evaluieren, ob die zumindest eine unpassende UID (152) in der Liste fehlender Pakete (160) gespeichert ist;

iii) wobei das Verfahren frei von einer Fensterung ist.

## Beschreibung

### Technisches Gebiet

Die Erfindung bezieht sich auf ein Verfahren zum passiven Überwachen von Paketströmen in einem Netzwerk, z.B. gemäß dem Internet Protocol. Das Verfahren weist auf: Empfangen einer Vielzahl von Paketen, welche jeweils eine eindeutige Identifizierung (UID) aufweisen, wobei die UIDs der Pakete einer vorbestimmten UID-Reihenfolge entsprechen, und wobei zumindest ein UID-Zyklus dieser UID-Reihenfolge verwendet wird; und Evaluieren der UIDs der empfangenen Pakete dahingehend, ob die UID-Reihenfolge der empfangenen UIDs der vorbestimmten UID-Reihenfolge entspricht. Ferner betrifft die Erfindung eine Empfänger-Vorrichtung, eingerichtet zum Durchführen des Verfahrens, und ein Netzwerk-System, das die Empfänger-Vorrichtung und eine Sender-Vorrichtung aufweist, die mit der Empfänger-Vorrichtung kommunikativ gekoppelt ist.

Die Erfindung kann sich somit auf das technische Gebiet von Paketströmen in einem Netzwerk beziehen, beispielsweise im Kontext von Schienenfahrzeugen.

### Technischer Hintergrund

In Netzwerken, beispielsweise im Bereich von Schienenfahrzeugen bzw. Schienen-Infrastruktur, findet gewöhnlich ein Datenaustausch statt, wobei Datenpakete zwischen Sendern und Empfänger verschickt werden. Dies geschieht nach bestimmten Protokollen, z.B. nach dem Internet Protocol (IP). Um einen zuverlässigen Datenaustausch sicherzustellen werden gewöhnlich aktive Überwachungsverfahren eingesetzt. Insbesondere findet dabei ein zusätzlicher Datenaustausch zwischen Sender und Empfänger statt und/oder Metadaten werden zusammen mit oder zusätzlich zu den Messdatenpaketen übertragen.

Im Gegensatz zu dem aktiven Überwachen ist ein passives Überwachen von Paketströmen (ohne zusätzliche (explizite) Kommunikation zwischen Sender und Empfänger) wenig etabliert und deutlich schwieriger zu implementieren. Jedoch kann in besonderen Anwendungen ein solches passives Überwachen erwünscht bzw. vorteilhaft sein. Dies z.B. in dem Fall, wenn keine zusätzlichen Daten-/Paketströme in das Netzwerk eingeführt werden sollen. Dies kann z.B. im Bereich der Schienenfahrzeugen bzw. Schienen-Infrastruktur der Fall sein. In diesem Bereich kann ein flexibles Überwachen von Paketströmen ohne zusätzliche Datenströme, welches aber dennoch die hohen Sicherheitsanforderungen erfüllt, besonders erwünscht sein.

### Zusammenfassung der Erfindung

Es kann ein Bedarf bestehen, Paketströme in einem Netzwerk auf effiziente und zuverlässige Weise zu überwachen.

Ein Verfahren, eine Empfänger-Vorrichtung, und ein Netzwerk-System (mit der Empfänger-Vorrichtung und einer Sender-Vorrichtung) werden im Folgenden beschrieben.

Gemäß einem ersten Aspekt der Erfindung wird ein (Computer-implementiertes) Verfahren beschrieben zum passiven Überwachen von Paketströmen in einem Netzwerk (z.B. gemäß dem Internet Protocol, IP), das Verfahren aufweisend:
i) Empfangen einer Vielzahl von Paketen (an einer Empfänger-Vorrichtung), welche jeweils eine eindeutige Identifizierung (unique identifier, UID) aufweisen,
   wobei die UIDs der Pakete einer vorbestimmten UID-Reihenfolge (z.B. 1, 2, 3, 4, etc.) entsprechen, und wobei zumindest ein UID-Zyklus dieser UlD-Reihenfolge verwendet wird; und
ii) Evaluieren der UIDs der empfangenen Pakete dahingehend, ob die UID-Reihenfolge der empfangenen UIDs der vorbestimmten UID-Reihenfolge entspricht, hierbei:
   iia) bei Feststellen, dass zumindest eine UID aus der vorbestimmten UID-Reihenfolge fehlt (z.B. Pakete 1 und 3 kommen an, aber Paket 2 fehlt): Speichern der zumindest einen fehlenden UID (z.B. Paket 2) in einer Liste fehlender Pakete;
   iib) bei Feststellen, dass zumindest eine UID nicht in die vorbestimmte UID-Reihenfolge passt (z.B. Paket 2 kommt zwischen Paket 4 und 5 an): Evaluieren, ob die zumindest eine unpassende UID in der Liste fehlender Pakete gespeichert ist (z.B. wird Paket 2 in der Liste gefunden).

In einem bevorzugten Ausführungsbeispiel ist das Verfahren frei von einer Fensterung/ Fensterverfahren (windowing).

Gemäß einem zweiten Aspekt der Erfindung wird eine Empfänger-Vorrichtung (bzw. eine Vorrichtung zur Datenverarbeitung) beschrieben, eingerichtet zum Durchführen eines Verfahrens wie oben beschrieben.

Gemäß einem dritten Aspekt der Erfindung wird ein Netzwerk-System beschrieben, aufweisend:
i) eine Empfänger-Vorrichtung wie oben beschrieben; und
ii) eine Sender-Vorrichtung, die mit der Empfänger-Vorrichtung kommunikativ gekoppelt ist.

Im Kontext des vorliegenden Dokuments kann der Begriff "Datenpaket" insbesondere eine (formatierte) Dateneinheit bezeichnen, die über ein Netzwerk (z.B. Internet) übertragen wird. In Netzwerken können Datenpakete verwendet werden, um z.B. Benutzerdaten von einer Quelle zu einem Ziel zu transportieren. Ein Datenpaket weist bevorzugt einen Header auf, der Steuerinformationen enthält. Ein Datenpaket weist zudem die zu transportierenden Daten in einem Datenbereich auf (Payload). Ferner kann ein Datenpaket eine Prüfsumme aufweisen, um die Sicherheit zu erhöhen. Die Prüfsumme kann auch Teil des Headers sein. Im vorliegenden Kontext kann ein Datenpaket gemäß einem bestimmten Protokoll konfiguriert sein. Beispielsweise kann ein Datenpaket konfiguriert sein gemäß dem Internet Protocol (IP), z.B. gemäß IPv4 oder IPv6. In einem Beispiel kann in (einem Teil des) dem Header die UID und/oder ein Zeitstempel gespeichert sein.

Im Kontext des vorliegenden Dokuments kann der Begriff "Fensterung" (Fensterverfahren, windowing) insbesondere ein etabliertes Verfahren bezeichnen (siehe z.B. TCP Implementierung), bei dem die Menge der zwischen Sender und Empfänger übertragenen Daten reguliert werden, insbesondere an die Netzwerkbedingungen anpasst werden. Beispielsweise kann ein (Zeit/Mengen) Fenster definiert werden, in welchem die Menge an übertragenen Daten zwischen Sender und Empfänger limitiert ist. Beispielsweise verwendet das Protokoll TCP einen Mengenabschnitt: es dürfen maximal x Pakete im Netz unterwegs sein, um die vollständige Übertragung sicher zu stellen. Bei einem Fensterung-freien Paketstrom kann hingegen eine beliebige Datenmenge (pro Zeitfernster) übertragen werden.

Im Kontext des vorliegenden Dokuments kann sich der Begriff "vorbestimmte Reihenfolge" insbesondere darauf beziehen, dass die UIDs für die transportierten Pakete in einer bestimmten Reihenfolge geniert werden. In einem einfachen Beispiel können die Pakete einfach gezählt werden: 1, 2, 3, etc. In einem weiteren Beispiel können komplexere Zahlen/Buchstaben Kombinationen verwendet werden, wobei Sender und Empfänger aufeinander abgestimmt (synchronisiert) sind. In einem Beispiel können die UIDs auch verschlüsselt sein. In einem Ausführungsbeispiel kann die vorbestimmte Reihenfolge nach einer bestimmten Anzahl von UIDs (UlD_max) wieder von vorne beginnen.

Im Kontext des vorliegenden Dokuments kann der Begriff "UID-Zyklus" (UID-Ring) insbesondere das Durchlaufen einer vorbestimmten Reihenfolge bezeichnen. Wird eine neue vorbestimmte Reihenfolgen (zum Generieren von UIDs) gestartet (z.B. fängt die Reihenfolge wieder von vorne an), so kann von einem neuen UID-Zyklus gesprochen werden.

Gemäß einem exemplarischen Ausführungsbeispiel kann die Erfindung auf der Idee basieren, dass Paketströme in einem Netzwerk auf effiziente und zuverlässige Weise passiv überwacht werden können, wenn an der Empfängerseite eine vorbestimmte Reihenfolge von UIDs der empfangenen Pakete dahingehend evaluiert werden, welche Pakete in der Reihenfolge fehlen bzw. an der falschen Stelle auftreten (unpassend). Fehlende Pakete können somit in einer Liste gespeichert werden und unpassende Pakete können mit dieser Liste abgeglichen werden. Auf diese einfache aber effiziente und zuverlässige Weise können verzögerte Pakete aufgefunden werden (und aus der Liste gelöscht werden), während verlorene Pakete (die auch nach längerer Zeit noch immer in der Liste fehlender Pakete vorhanden sind) als solche erkannt werden können.

Zusätzlich können die Pakete auch mittels Zeitstempel (insbesondere Sende-Zeitstempel) identifiziert werden; dies kann besonders von Vorteil sein, wenn mehrere UlD-Zyklen mit identischen vorbestimmten Reihenfolgen verwendet werden. Ein Vergleich von Empfänger-Zeitstempel und Sender-Zeitstempel kann eine einfache Berechnung von Verzögerung bzw. Verlust ermöglichen.

Bevorzugt wird das beschriebene Verfahren frei von einem Fenster-Verfahren durchgeführt. Entsprechend werden keine Zeitabschnitte und/oder Mengenabschnitte (Fenster) vorgesehen, in denen nur bestimmte Datenmengen übertragen werden. Dadurch kann das beschriebene Verfahren besonders flexibel und effizient durchführbar sein. In der beschriebenen Weise kann ein Überwachen eines Paketstroms in einem Netzwerk effizient und zuverlässig gelingen, und zwar in passiver Weise und frei von begrenzenden Daten-Zeitfenstern, wodurch besonders flexible Implementierungen ohne zusätzlichen Datenverkehr ermöglicht sein können. Eine besonders vorteilhafte Anwendung können Netzwerke im Bereich des Schienenverkehrs sein.

### Exemplarische Ausführungsbeispiele

Gemäß einem Ausführungsbeispiel weist das Verfahren auf: bei Feststellen, dass die unpassende UID in der Liste fehlender Pakete gespeichert ist: Löschen dieser UID aus der Liste fehlender Pakete. Dies kann den Vorteil haben, dass die Liste stets aktualisiert wird. Verzögerte Pakete, die schließlich gefunden wurden, brauchen somit nicht länger gespeichert zu werden.

Gemäß einem Ausführungsbeispiel weist das Verfahren zumindest einen der folgenden Schritte auf: Erstellen eines Empfänger-Zeitstempels (am Empfänger) für empfangene Pakete; Vergleichen des Empfänger-Zeitstempels eines empfangenen Pakets mit einem Sender-Zeitstempels dieses Pakets (insbesondere erstellt am Sender); insbesondere basierend hierauf: Berechnen der Verzögerung dieses Pakets. Mittels zumindest eines Zeitstempels kann ein Paket (neben der UID) identifiziert werden bzw. einem bestimmten UID-Zyklus zugeordnet werden. Anhand des Vergleichs von Sender-Zeitstempel und Empfänger-Zeitstempel kann eine Verzögerung berechnet werden. Ist die Verzögerung zu lange, kann das Paket auch als verloren deklariert werden.

Gemäß einem Ausführungsbeispiel weist das Verfahren auf: Feststellen, dass das Paket verzögert ist, wenn die Verzögerung unterhalb einer vordefinierten Verzögerung-Schwelle (Tmax) liegt. Die Verzögerung kann z.B. wie oben beschrieben mittels der Differenz zwischen Sender-Zeitstempel und Empfänger-Zeitstempel berechnet werden. Es kann eine Verzögerung-Schwelle (z.B. eine maximale Zeitspanne) definiert werden, nach der ein Paket als verloren angesehen wird. Gemäß einem Ausführungsbeispiel weist das Verfahren auf: Feststellen, dass das Paket verloren ist, wenn die Verzögerung oberhalb der vordefinierten Verzögerung-Schwelle (Tmax) liegt.

Gemäß einem Ausführungsbeispiel weist das Verfahren auf: Ermitteln einer letztmöglichen Empfang-Zeit (dies kann z.B. Tmax sein) und Eintragen der letztmöglichen Empfang-Zeit in die Liste fehlender Pakete. Auf diese Weise können Pakete in der Liste fehlender Pakete nach Ablauf der maximalen Empfang-Zeit als zu lange verzögert und/oder verloren angesehen (und entfernt) werden.

Gemäß einem Ausführungsbeispiel weist das Verfahren auf: Ermitteln einer letztmöglichen Sende-Zeit und Eintragen der letztmöglichen Sende-Zeit in die Liste fehlender Pakete. Ähnlich wie oben beschrieben können Pakete in der Liste fehlender Pakete nach Ablauf der maximalen Sende-Zeit als zu lange verzögert und/oder verloren angesehen (und entfernt) werden.

Gemäß einem Ausführungsbeispiel weist das Verfahren auf: Ermitteln eines Hashs über die während des Transports unveränderlichen Teile eines Pakets und/oder Eintragen des Hashs in die Liste fehlender Pakete. Veränderliche Teile des Pakets, zum Beispiel das TTL-Feld, das bei jedem Hop heruntergesetzt wird, soll nicht beim Hashing mitgenommen werden, denn sonst kann der Hash nicht zur eindeutiger Identifikation eines Pakets dienen.). Dies kann den Vorteil haben, dass Dopplungen erkannt werden können anhand identischer Hashes. Ein Hop ist in diesem Zusammenhang einen Sprung eines IP Pakets vom einen Host zum anderen Host. Dabei setzt der empfangende Host den Time To Live Zähler auf 1 herunter. Damit wird ausgeschlossen, dass ein Paket mehr als 255 Hops machen kann und unendlich im Netzwerk transportiert würde, wenn sein Ziel nicht gefunden wird.

Gemäß einem Ausführungsbeispiel weist das Verfahren auf: Evaluieren der UIDs und der Sender-Zeitstempel der empfangenen Pakete dahingehend, ob die UID-Sender-Zeitstempel Reihenfolge der empfangenen UIDs einer vorbestimmten UID-Sender-Zeitstempel Reihenfolge entspricht. Insbesondere hierbei: bei Feststellen, dass eine UID aus der vorbestimmten UID-Sender-Zeitstempel Reihenfolge fehlt: Bestimmen der letztmöglichen Paket-Sendezeit basierend auf der Paket-Sendezeit des nächsten empfangenen Pakets und Speichern der fehlenden UID und der bestimmten letztmöglichen Paket-Sendezeit in der Liste fehlender Pakete. Dadurch kann eine zuverlässige Überwachung der Pakete (auch bei mehreren UID-Zyklen) gelingen.

Gemäß einem Ausführungsbeispiel weist das Evaluieren ferner auf: bei Feststellen, dass die unpassende UID in der Liste fehlender Pakete gespeichert ist: Evaluieren, basierend auf der Verzögerung, insbesondere (basierend auf) dem Sender-Zeitstempel, des Pakets, ob das Paket zu dem aktuellen UID-Zyklus gehört. Dies kann den Vorteil haben, dass ein Paket eindeutig identifizierbar ist, auch wenn mehrere UID-Zyklen verwendet werden, welche jeweils dieselbe vorbestimmte Reihenfolge verwenden. Beispielsweise kann ein Paket "10" empfangen werden, dann Paket "0"; während Pakete 11 bis 15 fehlen. Pakete 11 bis 15 können in die Liste fehlender Pakete eingetragen werden und Paket "0" kann aufgrund zumindest des Sender-Zeitstempels einem anderen UID-Zyklus zugeordnet werden.

Gemäß einem Ausführungsbeispiel beginnt die vorbestimmte UID-Reihenfolge am Ende eines UID-Zyklus mit einem weiteren UID-Zyklus wieder von vorne. Auf diese Weise können eine Mehrzahl von UID-Zyklen hintereinander realisiert werden, die jeweils dieselbe vorbestimmte Reihenfolge verwenden. Dieses Generieren von UIDs kann z.B. mittels eines Überlaufzählers implementiert werden. Gemäß einem Ausführungsbeispiel ist jedes Paket mittels der UID und zumindest eines Zeitstempels eindeutig identifizierbar. Auch wenn mehrere UID-Zyklen verwendet werden und entsprechend UIDs mehrfach vergeben werden, kann eine eindeutige Identifizierung mittels Zeitstempel ermöglicht sein.

Gemäß einem Ausführungsbeispiel weist das Verfahren auf: Feststellen, ob ein gesamter UID-Zyklus verzögert und/oder verloren gegangen ist. In vorteilhafter Weise kann das beschriebene Verfahren nicht nur auf Pakete, sondern auch auf ganze UID-Zyklen angewendet werden. Auch ein ganzer UID-Zyklus kann sich verzögern bzw. verloren gehen.

Gemäß einem Ausführungsbeispiel wird bei dem Verfahren ein Internet Protokoll (IP) verwendet, insbesondere IPv4 und/oder IPv6. Damit kann das beschriebene Verfahren in vorteilhafter Weise in etablierte und weit verbreitete Systeme implementiert werden. Gemäß dem IP weist ein Datenpaket beispielsweise eine untere Schicht (Daten-bezogen) und eine obere Schicht (Transport-bezogen) auf. Die untere Schicht enthält die Daten in einem Datenbereich (Payload) und hat einen Header mit Steuerinformationen. Im Kontext des vorliegenden Dokuments kann der Begriff "Header" insbesondere einen Bereich/Teil eines Datenpakets bezeichnen, der Steuerinformationen enthält. Ein Header kann beispielsweise aufweisen (insbesondere organisiert in Feldern): Quell- und Zieladressen, Protokoll-Information/Nummer, Länge, Verifikation (z.B. Prüfsumme), nächste-Protokollnummer. Ein Header kann mit einem Protokoll-Handler (z.B. IP-Handler) einer Vorrichtung zur Datenverarbeitung interagieren, so kann z.B. der Handler anhand der Protokollnummer das Datenpaket gemäß dem gewünschten Protokoll bearbeiten.

Gemäß einem Ausführungsbeispiel sind Sender und Empfänger miteinander synchronisiert (insbesondere (System-) Zeit-synchronisiert und/oder hinsichtlich der vorbestimmten Reihenfolge synchronisiert). Gemäß einem Ausführungsbeispiel verwenden Sender und Empfänger denselben Algorithmus, insbesondere hinsichtlich der UID-Reihenfolge.

Gemäß einem Ausführungsbeispiel wird neben den Paketströmen kein weiterer (expliziter) (also kein Datenverkehr zusätzlich zu UID und/oder Zeitstempel) Datenverkehr zwischen Sender und Empfänger verwendet. Gemäß einem Ausführungsbeispiel ist der Datenverkehr zwischen Sender und Empfänger (im Wesentlichen; außer UID und Zeitstempel) frei von Metadaten. Gemäß einem Ausführungsbeispiel ist der Empfänger frei von Informationen bezüglich des Paketstroms. Diese Merkmale definieren unterschiedliche Aspekte eines passiven Überwachens des Paketstroms und stehen im Kontrast zu den Aspekten eines aktiven Überwachens.

Gemäß einem Ausführungsbeispiel wird das Verfahren im Kontext von Schienenfahrzeugen und/oder Schienen-Infrastruktur verwendet. In einem Ausführungsbeispiel kann das Netzwerk-System mit einem oder mehr Schienenfahrzeug(en) und/oder mit weiteren Komponenten der Infrastruktur gekoppelt sein (drahtlos und/oder drahtgebunden). Beispielsweise können zwei oder mehr Schienenfahrzeuge miteinander kommunikativ gekoppelt sein. Ferner kann ein Schienenfahrzeug-Kontrollsystem (z.B. von einer Leitstelle) mit dem Netzwerk-System bzw. dem Schienenfahrzeug gekoppelt sein. Das Schienenfahrzeug-Kontrollsystem kann das Netzwerk-System ergänzen und/oder steuern/regeln. In einem Ausführungsbeispiel kann das Netzwerk-System Teil eines größeren Schienen-Infrastruktur-Netzwerkes sein. Zu beachten ist in einem Beispiel, dass im Kontext von Schienenfahrzeugen besonders hohe Sicherheitsstandards zu erfüllen sind.

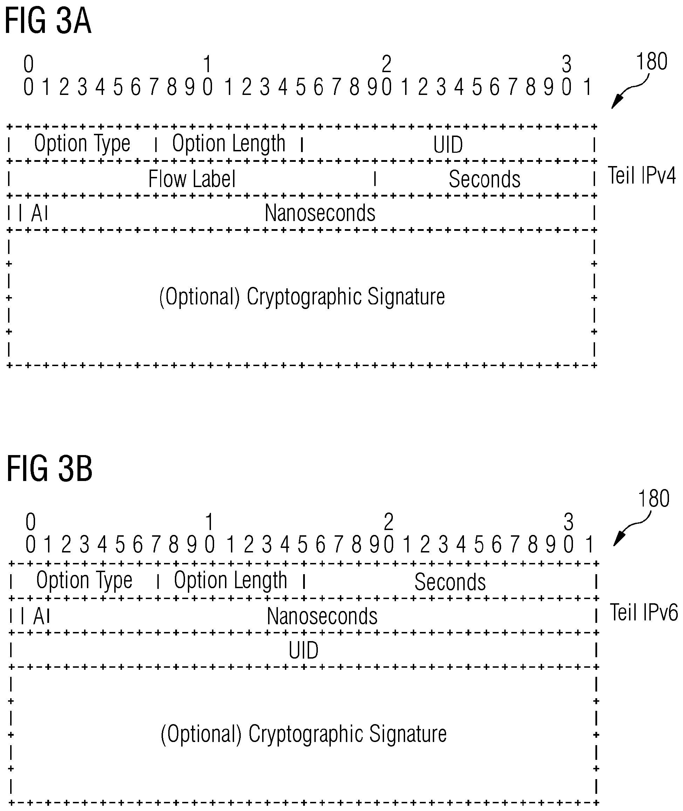

Gemäß einem Ausführungsbeispiel ist die UID und/oder zumindest ein Zeitstempel eines Pakets in einem Teil des IP-Headers dieses Pakets gespeichert. Dies kann eine effiziente und zuverlässige Implementierung ermöglichen (siehe z.B. auch Figur 3).

Gemäß einem Ausführungsbeispiel weist das Verfahren auf: bei Feststellen, dass die Zeitstempel von zwei oder mehr Paketen (im Wesentlichen) identisch sind: Unterscheiden der Pakete (ausschließlich) mittels UID und/oder einem Abschätzen basierend auf dem vorherigen/nächsten Paket.

Gemäß einem Ausführungsbeispiel weist das Verfahren zumindest eines der folgenden Merkmale auf: Generieren der UID an dem Sender, Generieren des Sender-Zeitstempels an dem Sender, Vergleichen einer UID mit der vorhergehenden UID und/oder der nachfolgenden UID. Gemäß einem Ausführungsbeispiel weist das Verfahren auf: Verwenden eines Datenfluss-Identifizierers. Gemäß einem Ausführungsbeispiel weist das Verfahren auf: Verschlüsseln und/oder Entschlüsseln empfangener Pakete, insbesondere mittels eines pseudo-zufälligen Algorithmus. Dadurch kann die Sicherheit deutlich erhöht werden.

Gemäß einem Ausführungsbeispiel des Verfahrens wird eine geringe Übertragungsgeschwindigkeit für den Paketstrom verwendet. Dies kann den Vorteil haben, dass eine bessere (zeitliche) Auflösung erhalten wird, insbesondere kann ein zeitliches Überschneiden (von UID-Zyklen) verhindert werden. Gemäß einem Ausführungsbeispiel wird eine Übertragungsgeschwindigkeit in Abhängigkeit von UID_max und/oder Tmax gesetzt.

Gemäß einem exemplarischen Ausführungsbeispiel wird eine Übertragungsgeschwindigkeit von UID_max / (2 Tmax) [Paket]/[Sekunde] oder weniger verwendet (insbesondere, wenn das Verfahren nur mit UID angewandt wird). Die Übertragungsgeschwindigkeit kann von der Größe der Zähler abhängen, z.B. kann ein UID-Ring/Zyklus von Zahlen durch zwei geteilt werden. Dabei kann per Tmax diese Zahl an neue Pakete versandt werden, weil z.B. noch fehlende Pakete in der Liste fehlender Pakete sind.

Gemäß einem Ausführungsbeispiel wird eine Übertragungsgeschwindigkeit (UID_max) / (2 TSᵣₑₛ) [Paket]/[Sekunde] oder weniger verwendet (insbesondere, wenn das Verfahren mit UID und Zeitstempel angewandt wird). TSᵣₑₛ ist hierbei die Zeitstempelauflösung in Sekunden.

Im Folgenden wird ein exemplarisches Ausführungsbeispiel des Verfahrens anschaulich dargestellt. Der beschriebene Algorithmus wird verwendet, um Paketverlust und -verzögerung an der Empfangsseite einer Netzwerkverbindung zu evaluieren.

Mit jedem Paket sendet der Sender einen Sender-Zeitstempel und eine eindeutige Kennung (UID). Diese können folgende Eigenschaften haben:
1. Zeitstempel vom Sender sind aufsteigend mit einer endlichen Auflösung.
2. Es gibt eine begrenzte Anzahl von UIDs (UID_max).
3. Die Sende-Reihenfolge der Pakete kann aus den aufeinanderfolgenden UIDs abgeleitet werden (vorbestimmte Reihenfolge).
4. UIDs werden nur deterministisch wiederholt (UID-Zyklen).
5. Sender und Empfänger verwenden zu diesem Zweck denselben Algorithmus (synchronisiert).
6. Der Sender wiederholt UIDs nicht pro eindeutigem Zeitstempel. Dies kann z.B. erreicht werden, indem sichergestellt wird, dass die Übertragungsgeschwindigkeit ausreichend niedrig ist.

Eine Implementierung eines Zeitstempels kann z.B. aus einer Sekunde und einer Nanosekunde bestehen. Die Zeit 0 kann in einer genau definierten Zeitperiode liegen. Eine einfache Realisierung einer solchen UID-Reihenfolge kann ein Überlaufzähler sein. Andere Realisierungen können Pseudo-Zufallszahlengeneratoren sein. Beispielsweise kann ein Zähler bis UID_max zählen. Eine Möglichkeit, diese Informationen vom Sender an den Empfänger zu senden besteht darin, sowohl Zeitstempel als Reihenfolgeangabe im Paket-Header zu übermitteln. Wenn ein Zeitstempel mit Nanosekunden Auflösung und ein 16 Bit Zähler verwendet werden, beträgt eine ausreichend niedrige Übertragungsgeschwindigkeit/Verbindungsgeschwindigkeit für IP-Pakete 1 Pbit/s.

Beim Empfänger wird ein Empfänger-Zeitstempel erstellt, der den Beginn des Empfangs anzeigt, der mit dem Sender-Zeitstempel und der UID kombiniert wird. Eine weitere Voraussetzung für den Algorithmus kann darin bestehen, dass die Zeit auf beiden Systemen synchronisiert wird.

Als Parameter können wie folgt definiert werden:
Tmax: Eine Wartezeit für die Verzögerung-Schwelle. Wenn das Paket im Netzwerk länger als Tmax ist, wird das Paket als verloren gezählt.
prev_transmit_start: Sender-Zeitstempel der zuvor empfangenen Pakets.
prev_uid: UID des zuvor empfangenen Pakets.
missing_packets: Liste fehlender Pakete. Einträge sind Tupel von
<last_possible_transmit_start>, <UID_of_missing_packet>.

Als Konstante kann wie folgt definiert werden:
MAX_UID: Der Maximalwert des Zählers (bevor er von vorne beginnt) UID_max.

Der letzte mögliche Sende-Start fehlender Pakete ist hier der Übertragungsbeginn des zuletzt empfangenen Pakets. Zukünftige Verluste können nicht vorhergesagt werden.

Die folgenden Unterprogramme können z.B. verwendet werden:
1. add_missing_packets ( uids, latest_transmit_start )
   Dieses Unterprogramm fügt die Daten ein oder mehrere Pakete an die Liste fehlender Pakete an. "Uids" enthält eine Liste der UIDs, latest_transmit_start ist der letztmögliche Versandzeitpunkt für diese UIDs.
   Für jedes uid wird aus der uids Liste das Tuple (latest_transmit_start, uid) zu der Liste missing_packets hinzugefügt.
2. remove_missing_packet ( transmit_start, uid, timestamp_equal=False )
   Dieses Unterprogramm löscht einen Paketeintrag aus der Liste fehlender Pakete. Transmit_start und uid sind von einem empfangenen Paket (das vermutlich verloren wurde). Wenn timestamp_equal wahr ist, sollte das zu entfernende Paket den gleichen Zeitstempel haben. Letzteres ist der Fall, wenn mehrere UIDs mit demselben Zeitstempel vorkommen. Es kann auch vorkommen, dass ein vermutlich verlorenes Paket doch nicht in die Liste auftaucht. Daher meldet das Programm als Rückgabewert, ob ein Eintrag gelöscht wurde oder nicht.
   hit_list: Eine Liste von latest_transmit_times von möglichen zu entfernenden Paketen auf Basis von UID-Werten. Die Liste wird leer initialisiert.
   remove_ts: Zeitstempel vom zu entfernenden Paket. Initialwert ist None.
   Wenn timestamp_equal erfüllt ist, wird remove_ts zu dem Wert von transmit_start gesetzt. Ansonsten wird geschaut, ob uid in der Liste vorkommt, und es wird für jeden Treffer geschaut, ob der latest_transmit_time größer ist als transmit_time. Wenn das erfüllt ist, wird diese Zeit den hit_list hinzugefügt.
   Wenn hit_list Zeitstempel enthält, wird remove_ts auf den Mindestwert aus der Liste gesetzt.
   Es wird versucht das Tuple (remove_ts, uid) aus der Liste missing_packets zu löschen. Wenn dies gelingt, wird True zurück an das anrufende Programm gemeldet. Wenn dies nicht gelingt, wird False gemeldet.
3. missing_uids ( uid, prev_uid )
   Dieses Unterprogramm bestimmt anhand der Parameter uid, der UID des zuletzt empfangenen Pakets und prev_uid, der UID des vorletzt empfangenen Pakets, mit Hilfe der Konstante MAX_UID, welche UIDs fehlen könnten. Eine Liste mit fehlenden UIDs oder die Information "UIDs aus der Reihe/dem Zyklus" wird an den Anrufer zurückgegeben. Der Anrufer dieses Unterprogramms muss, anhand von Zeitstempel und UID des letzten und vorletzten Pakets sicherstellen, dass Pakete fehlen.
   Wenn uid größer ist als prev_uid+1 dann fehlen die UIDs prev_uid+1 bis uid, uid nicht inklusive. Wenn uid < prev_uid+1, dann fehlen außer der UIDs prev_uid+1 bis MAX_UID, auch die UIDs 0 bis uid, uid nicht inklusive.
   Ansonsten gibt es keine fehlenden Pakete.
   Eine Liste mit fehlenden UIDs wird erstellt und an den Anrufer des Unterprogramms gegeben. Je nach Ausführungsform kann die Liste leer sein, oder einen Fehlermeldung bei leerer Liste gegeben werden.
4. uid_ranges( uid )
   Dieses Unterprogramm ermittelt anhand der Parameter uid, der UID eines Paketes, den UIDs im UID-Zyklus (Ring) die in der Vergangenheit angeordnet werden, und den UIDs die in der Zukunft angeordnet werden. Hierzu wird auch die Konstante MAX_UID benutzt. Diese Ausführungsform des Unterprogramms kann noch angepasst werden bezüglich der Bruchteile des UID-Rings die in Vergangenheit und Zukunft liegen. Der Parameter uid, sollte nicht größer sein als MAX_UID. Zwei Listen mit UIDs werden dem Anrufer zurückgegeben, eine mit UIDs in die Zukunft, und eine mit UIDs in die Vergangenheit.

UID_HALF wird initialisiert als der ganzzähliger Bruchteil MAX_UID/2 und wird nach unten gerundet.

Wenn uid kleiner/gleich ist als/wie UID_HALF+1 und MAX_UID ungerade ist oder uid kleiner/gleich ist als/wie UID_HALF und MAX_UID gerade ist, dann ist der Reihe der UIDs die in der Zukunft liegen uid+1 bis uid+UID_HALF, uid+UID_HALF inklusive. Die Reihe der UIDs die in die Vergangenheit liegen ist uid+UID_HALF+1 bis MAX_UID, MAX_UID inklusive, wenn uid null ist, oder sonst 0 bis uid-1, uid-1 inklusive, erweitert mit uid+UID_HALF+1 bis MAX_UID, MAX_UID inklusive.

Wenn uid größer ist als UID_HALF+1 und MAX_UID ungerade ist, oder uid größer als UID_HALF und MAX_UID gerade ist, dann ist die Reihe der UIDs die in der Vergangenheit liegen uid - UID_HALF bis uid-1, uid-1 inklusive, und die Reihe UIDs die in der Zukunft liegen ist Null bis uid-UID_HALF-1, uid-UlD_HALF-1 inklusive, wenn uid gleich MAX_UID ist, oder ansonsten Null bis uid-UID_HALF-1, uid-UID_HALF-1 inklusive, erweitert mit uid+1 bis MAX_UID, MAX_UID inklusive.

Die ermittelten Reihen mit UIDs in der Vergangenheit und Zukunft werden erstellt und dem Anrufer zurückgegeben.

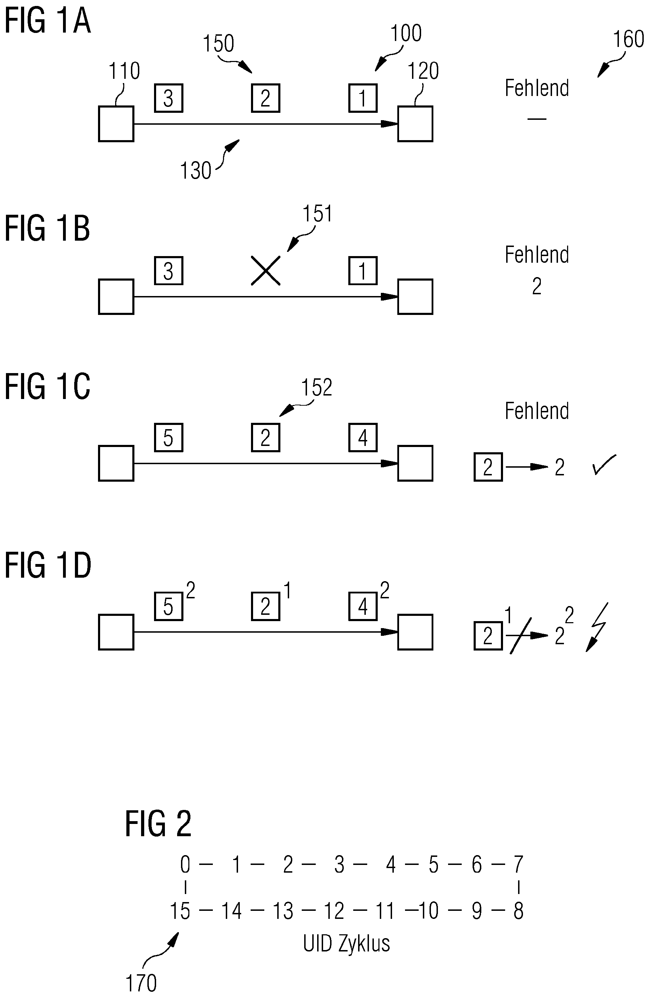

Das Unterprogramm 4 kann zwei Bereiche ergeben: UIDs_Vergangenheit und UIDs_Zukunft. Die aufeinanderfolgenden UIDs werden als Ring (Zyklus) von UIDs behandelt. Dies ist z.B. schematisch dargestellt in Figur 2 für einen 4-Bit-Zähler mit MAX_UID = 15.

Nun sind die zwei Bereiche, die in positiver und negativer Richtung entlang dem Ring verlaufen, definiert. Wenn z.B. die UID des zuvor empfangenen Pakets "5" ist, ist der Bereich in positiver Richtung (Zukunft) [6 .. 12]. Der andere Bereich (Vergangenheit) läuft um den Ring in negativer Richtung und besteht aus UIDs [4 .. 0] und [15 .. 13]. UID ist nicht in den Bereichen enthalten. Ein Ring mit einer geraden MAX_UID von 14 kann ebenfalls gegeben sein.

Für jedes empfangene Paket kann der Algorithmus nun wie folgt ausgeführt werden:

### Schritt -1: Initialisieren der Parameter des Algorithmus:

Beim Empfang des ersten Pakets werden die Algorithmus-Parameter wie folgt initialisiert:
prev_transmit_start = transmit_start
prev_uid = uid - 1

Damit ist das erste Paket gültig empfangen, wenn die errechnete Paketverzögerung in Schritt 1 unter Tmax liegt. Dieses erste Paket wird künstlich als nächstes Paket in die Reihe Pakete eingefügt.

Schritt 0: Setzen der Variablen für das aktuelle Paket wie folgt:
transmit_start = <transmit_start_timestamp> des aktuell empfangenen Pakets.
uid = <UID> des aktuell empfangenen Pakets.

### Schritt 1: Berechnung der Verzögerung

Die Verzögerung jedes empfangenen Pakets wird wie folgt berechnet:
<delay> = <receive_start_timestamp> - <transmit_start_timestamp>

Diese Verzögerung kann negativ sein bei einer kurzen Laufzeit und einer größeren Zeitabweichung zwischen Sender und Empfänger.

Das Paket wird mit einer endlichen Verzögerung als empfangen gezählt, wenn <delay> kleiner oder gleich Tmax ist. Andernfalls wird das Paket mit einer endlichen Verzögerung als verloren gezählt.

### Schritt 2: Aktualisierung der missing_packets Liste.

Die Liste der fehlenden Pakete wird nach folgendem Algorithmus aktualisiert:
Wenn transmit_start gleich oder größer ist wie/als prev_transmit_start und uid ist gleich prev_uid +1, dann ist das zuletzt empfangene Paket in der richtigen Reihenfolge empfangen. Es muss nichts getan werden. Diese Situation kann auch mit einer kleinen Wahrscheinlichkeit zufällig auftreten bei großen Mengen verlorener Pakete, was in Kauf genommen werden kann. Der Algorithmus wird in Schritt 3 weitergeführt.
Wenn transmit_start größer ist als prev_transmit_start, sind Pakete verloren gegangen. Die Reihe verlorene Pakete wird bestimmt durch Ausführen des Unterprogramms 3, missing_uids, mit uid und prev_uid als Argumente. Jedes UID aus der Liste mit UIDs, die fehlen, wird als fehlendes Paket in die missing_packets Liste eingetragen über das Unterprogramm 1, add_missing_packets, als Argumente der Liste UIDs und transmit_start. Der Algorithmus wird in Schritt 3 weitergeführt.
Wenn transmit_start kleiner ist als prev_transmit_start, ist ein vermutlich verlorenes Paket aufgetaucht. Es kann sich aber auch um eine Paketdoppelung handeln, die im Netzwerk aufgetreten ist. Da es um ein empfangenes Paket geht, wurde der Verlust nur auf Basis der Paketverzögerung bestimmt in Schritt 1. Es wird versucht das ältestmögliche Paket aus der Liste mit fehlenden Pakete zu entfernen mithilfe vom Unterprogramm 2, remove_missing_packet mit Argumenten uid und transmit_start. Der Algorithmus wird in Schritt 3 weitergeführt.

Sonst muss transmit_start gleich sein wie prev_transmit_start. Die für diesen Fall beschriebene Prozedur geht davon aus, dass die maximale Datenübertragungsrate unter der für den Algorithmus notwendigen Datenübertragungsrate liegt, wie oben beschrieben. Jetzt werden, mithilfe von Unterprogramm 4, uid_ranges, mit Argument prev_uid, in den Listen vergangener und zukünftige Paketnummer ermittelt.

Wenn in diesem Fall uid gleich ist zu prev_uid, dann muss eine Paketdoppelung vorliegen. Es muss weiter nichts getan werden. Der Algorithmus wird in Schritt 3 weitergeführt.

Wenn in diesem Fall das Paket in die Liste der fehlenden Pakete vorkommt, wo der Zeitstempel tatsächlich gleich ist, dann lag das Paket in der Vergangenheit und kann aus der Liste missing_packets entfernt werden. Dieser Fall kann auftreten bei einem etwas verzögerten Paket, aber auch im Fall, wenn uid jetzt in die der Zukunft zugeordneten Reihe von Paketnummern zugeordnet werden würde. Für diese Inkonsistenz gibt es z.B. die Lösung das Paket aus der Reihe missing_packets zu entfernen, wenn es dort vorhanden ist. Das Entfernen wird mit Hilfe des Unterprogramms 2 remove_missing_packet versucht mit Argumenten uid, transmit_start, und transmit_start_equal ist True. Wenn dies gelingt, kam das Paket in der Liste vor, wurde entfernt, und es muss nichts weiter getan werden. Der Algorithmus wird in Schritt 3 weitergeführt.

Wenn in diesem Fall uid in der Reihe zukünftiger Paketnummern liegt, wird mithilfe von Unterprogramm 3 missing_uids, mit Argumenten uid und prev_uid, eine Liste mit UIDs von fehlenden Pakete ermittelt. Die fehlende Pakete werden mithilfe von Unterpgrogram 1 add_missing_packets, mit Argumenten "Liste fehlender UIDs" und transmit_start, in die Liste missing_packets eingetragen. Der Algorithmus wird in Schritt 3 weitergeführt.

Wenn in diesem Fall uid in die Reihe vergangener Paketnummer liegt, können zwei Möglichkeiten vorhanden sein. Das Paket war nicht in der Liste fehlender Pakete vorhanden; das würde bedeuten, dass mehr als die Hälfte der UIDs übersprungen wurde und zusätzliche Pakete in die Liste fehlende Pakete eingetragen werden müssten. Dies ist aber unwahrscheinlich auf Grund der Datenratenbegrenzung, die angenommen wird. Eher wahrscheinlich ist, dass ein doppeltes Paket entdeckt wurde. In diesem Fall ist nichts mehr zu tun. Eine der beide Fälle muss umgesetzt werden. Wir setzen den letzteren Fall um, tun nichts, und der Algorithmus wird in Schritt 3 weitergeführt.

Schritt 3: Ermitteln von missing_packets Verlusten aufgrund von Verzögerungen > Tmax. Dieser Schritt kann unternommen werden, um sicherzustellen, dass Pakete in der Liste nicht für immer dort aufbewahrt werden. Andernfalls würde die Liste erst geleert, wenn alle Pakete endlich ankommen würden. Da dies nicht der Fall ist (es gibt echte Verluste in Netzwerken), wird die Wartezeit für die Verlustschwelle Tmax festgelegt. Dieser Wert kann das Netzwerk-Timeout sein (120 oder 255 Sekunden je nach Definition), aber für Echtzeitprotokolle auch auf eine kürzere Zeit. Tmax sollte so eingestellt werden, dass doppelte Verlustzahlen wegen normal verzögerten Pakete weitgehend vermieden werden.

Für jeden Paketeintrag in die Liste missing_packets wird bestimmt, ob der Transmissionsstartzeitpunkt weiter in der Vergangenheit liegt als der letzte Empfangszeitpunkt minus Tmax. Wenn das der Fall ist, wird der Eintrag aus die Liste der fehlenden Pakete entfernt (ohne ein Unterprogramm zu benutzen), und das Paket wird mit einer unbekannten/unendlichen Verzögerung als verloren definiert.

Die unendliche Verzögerung kann dem Benutzer z.B. durch ein Flag oder einen speziellen Wert signalisiert werden, z.B. None anstelle einer Zahl. Da diese Bedingung nur bei Paketen aus der missing_packets Liste auftreten kann, signalisiert dies auch, dass die transmit_start Zeit dieser Pakete eine geschätzte transmit_start Zeit war.

### Schritt 4: Aktualisieren der Algorithmus-Variablen.

Die Variablen des Algorithmus werden aktualisiert, um die Ausführung des Algorithmus mit dem nächsten empfangenen Paket vorzubereiten.
prev_transmit_start = transmit_start
prev_uid = uid

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Die Figuren 1A bis 1D zeigen das passive Überwachen von Paketströmen in einem Netzwerk, gemäß exemplarischen Ausführungsbeispielen der Erfindung.
Figur 2 zeigt einen UID-Zyklus mit vorbestimmter Reihenfolge, gemäß einem exemplarischen Ausführungsbeispiel der Erfindung.
Die Figuren 3A und 3B zeigen jeweils einen Teil eines Headers eines Internet Protokolls, gemäß exemplarischen Ausführungsbeispielen der Erfindung.

### Detaillierte Beschreibung der Zeichnungen

Die Darstellungen in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

Die **Figuren 1A bis 1D** zeigen das Überwachen von Paketströmen in einem Netzwerk 100, gemäß exemplarischen Ausführungsbeispielen der Erfindung. In diesen Beispielen werden Pakete 150 (z.B. IP-Datenpakete) von einem Sender 110 zu einem Empfänger 120 übertragen (mit Bezugszeichen 130 dargestellt). Die gesendeten Pakete 150 werden anhand einer vorbestimmten Reihenfolge in aufsteigender Weise mit UIDs (und Sendezeitstempel) versehen: das erste Paket erhält die UID "1", das zweite Paket erhält die UID "2", usw. Um Paketverzögerung und/oder Paketverlust in dem Netzwerk zu überwachen, wird ein passives Überwachungsverfahren eingesetzt. Entsprechend werden keine zusätzlichen Nachrichten zwischen Sender und Empfänger ausgetauscht und/oder keine weiteren Metadaten (neben UID und Zeitstempel) verwendet. Ferner ist bemerkenswert, dass keine Fensterung (windowing) durchgeführt wird. In anderen Worten werden keine (Zeit/Mengen-) Fenster mit limitierten Datenübertragungsmengen definiert, wie es bei etablierten Protokollen wie TCP der Fall ist.

**Figur 1A****:** eine Vielzahl von Paketen 150 (hier 1 bis 3) werden vom Empfänger 120 empfangen, wobei jedes Paket 150 eine eindeutige Identifizierung (UID) aufweist. Die UIDs der Pakete 150 entsprechen der vorbestimmten UID-Reihenfolge, und es wird ein UID-Zyklus dieser UID-Reihenfolge verwendet. Am Empfänger 120 wird evaluiert, ob die UID-Reihenfolge der empfangenen UIDs der vorbestimmten UID-Reihenfolge entspricht. Dies ist im Beispiel von Figur 1A gegeben.

**Figur 1B****:** im Gegensatz zu dem Beispiel von Figur 1A wird festgestellt, dass eine UID aus der vorbestimmten UID-Reihenfolge fehlt; hier Paket "2". Diese fehlende UID 151 wird in einer Liste fehlender Pakete 160 gespeichert.

**Figur 1C****:** Dieses Beispiel folgt zeitlich dem Beispiel der Figur 1B. Es wird beim Evaluieren festgestellt, dass eine UID (hier Paket "2") nicht in die vorbestimmte UID-Reihenfolge passt, denn Paket "2" passt nicht in die Reihenfolge zwischen "4" und "5". Es wird ferner evaluiert, ob diese unpassende UID 152 in der Liste fehlender Pakete 160 gespeichert ist. Dies ist der Fall: im Beispiel von Figur 1B wurde Paket "2" in die Liste fehlender Pakete eingetragen. Nach dem Feststellen, dass die unpassende UID 152 in der Liste fehlender Pakete 160 gespeichert ist, kann Paket/UID "2" aus der Liste fehlender Pakete 160 gelöscht werden. Paket "2" ist somit verzögert, aber nicht verloren.

**Figur 1D****:** In diesem Beispiel kommen zwei UlD-Zyklen hintereinander zum Einsatz. Das bedeutet, UIDs werden entsprechend der vorbestimmten Reihenfolge vergeben/generiert, bis der erste UID-Zyklus (1) durchlaufen ist. Danach beginnt die vorbestimmte Reihenfolge wieder von vorne mit dem zweiten UID-Zyklus (2). Es wird beim Evaluieren festgestellt, dass eine UID (hier "2") nicht in die vorbestimmte UID-Reihenfolge passt, denn Paket "2" passt nicht in die Reihenfolge zwischen "4" und "5". Allerdings lässt sich anhand des Zeitstempels (z.B. Sender-Zeitstempel) feststellen, dass die Pakete "4" und "5" aus dem zweiten UID-Zyklus (2) stammen, während Paket "2" aus einem anderen UID-Zyklus stammt (hier UID-Zyklus 1). Das Paket mit UID "2" aus dem ersten UID-Zyklus (1) ist somit nicht das gesuchte Paket mit der UID "2" aus dem zweiten UID-Zyklus (2).

**Figur 2** zeigt einen UID-Zyklus 170 mit vorbestimmter Reihenfolge, gemäß einem exemplarischen Ausführungsbeispiel der Erfindung. Die vorbestimmte Reihenfolge beginnt bei 0 und steigt dann an bis 15. Den Paketen wird entsprechend ihrer Reihenfolge eine Zahl der vorbestimmten Reihenfolge als UID zugewiesen. Am Ende des UID-Zyklus 170 beginnt die vorbestimmte Reihenfolge wieder von vorne (0 zu 15), so dass ein weiterer UID-Zyklus beginnt. In anderen Worten werden die UIDs mittels eines Überlaufzählers generiert, der nach einer gewissen Anzahl von UIDs wieder von vorne beginnt. Entsprechend werden bei dem Durchlauf mehrerer UlD-Zyklen die UIDs der vorbestimmten Reihenfolge mehrfach vergeben. Allerdings können die Pakete mit identischen UIDs anhand von zumindest einem Sendezeitstempel eindeutig identifizierbar sein, bzw. unterschiedlichen UlD-Zyklen zugeordnet werden.

Die **Figuren 3A und 3B** zeigen jeweils einen Teil eines Headers 180 eines Internet Protocol (IP), gemäß exemplarischen Ausführungsbeispielen der Erfindung. Während Figur 3A das IPv6 betrifft, bezieht sich Figur 3B auf IPv4. Ein IP-Datenpaket (mit Header und Datenbereich) kann ein Beispiel für ein erfindungsgemäßes Paket sein. Die zugewiesene UID (der vorbestimmten Reihenfolge) kann beispielsweise im gezeigten Header 180 eingetragen werden.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffs sind Personen männlicher, weiblicher oder anderer Geschlechteridentität mit umfasst.

## Patentansprüche

1. Ein Computer-implementiertes Verfahren zum passiven Überwachen von Paketströmen (130) in einem Netzwerk (100), das Verfahren aufweisend:
Empfangen einer Vielzahl von Paketen (150), welche jeweils eine eindeutige Identifizierung, UID, aufweisen,
wobei die UIDs der Pakete (150) einer vorbestimmten UID-Reihenfolge entsprechen, und wobei zumindest ein UID-Zyklus (170) dieser UID-Reihenfolge verwendet wird; und
Evaluieren der UIDs der empfangenen Pakete (150) dahingehend, ob die UID-Reihenfolge der empfangenen UIDs der vorbestimmten UID-Reihenfolge entspricht, hierbei:
bei Feststellen, dass zumindest eine UID aus der vorbestimmten UID-Reihenfolge fehlt: Speichern der zumindest einen fehlenden UID (151) in einer Liste fehlender Pakete (160);
bei Feststellen, dass zumindest eine UID nicht in die vorbestimmte UID-Reihenfolge passt: Evaluieren, ob die zumindest eine unpassende UID (152) in der Liste fehlender Pakete (160) gespeichert ist;
wobei das Verfahren frei von einer Fensterung ist.

2. Das Verfahren gemäß Anspruch 1, aufweisend:
bei Feststellen, dass die unpassende UID (152) in der Liste fehlender Pakete (160) gespeichert ist: Löschen dieser UID aus der Liste fehlender Pakete (160).

3. Das Verfahren gemäß einem der Anspruch 1 oder 2, aufweisend:
Erstellen eines Empfänger-Zeitstempels für empfangene Pakete (150);
Vergleichen des Empfänger-Zeitstempels eines empfangenen Pakets (150) mit einem Sender-Zeitstempels dieses Pakets (150); und basierend hierauf:
Berechnen der Verzögerung dieses Pakets (150).

4. Das Verfahren gemäß Anspruch 3, aufweisend:
Feststellen, dass das Paket (150) verzögert ist, wenn die Verzögerung unterhalb einer vordefinierten Verzögerung-Schwelle (Tmax) liegt; und/oder
Feststellen, dass das Paket (150) verloren ist, wenn die Verzögerung oberhalb der vordefinierten Verzögerung-Schwelle (Tmax) liegt.

5. Das Verfahren gemäß einem der vorhergehenden Ansprüche, ferner aufweisend zumindest eines der folgenden Merkmale:
Ermitteln einer letztmöglichen Empfang-Zeit und Eintragen der letztmöglichen Empfang-Zeit in die Liste fehlender Pakete (160);
Ermitteln einer letztmöglichen Sende-Zeit und Eintragen der letztmöglichen Sende-Zeit in die Liste fehlender Pakete (160);
Ermitteln eines Hashs über die während des Transports unveränderlichen Teile eines Pakets (150) und Eintragen des Hashs in die Liste fehlender Pakete (160).

6. Das Verfahren gemäß einem der vorhergehenden Ansprüche, aufweisend:
Evaluieren der UIDs und der Sender-Zeitstempel der empfangenen Pakete (150) dahingehend, ob die UID-Sender-Zeitstempel Reihenfolge der empfangenen UIDs einer vorbestimmten UID-Sender-Zeitstempel Reihenfolge entspricht, hierbei:
bei Feststellen, dass eine UID aus der vorbestimmten UID-Sender-Zeitstempel Reihenfolge fehlt: Bestimmen der letztmöglichen Paket-Sendezeit basierend auf der Paket-Sendezeit des nächsten empfangenen Pakets und Speichern der fehlenden UID (151) und der bestimmten letztmöglichen Paket-Sendezeit in der Liste fehlender Pakete (160).

7. Das Verfahren gemäß einem der vorhergehenden Ansprüche, wobei das Evaluieren ferner aufweist:
bei Feststellen, dass die unpassende UID (152) in der Liste fehlender Pakete gespeichert (160) ist: Evaluieren, basierend auf der Verzögerung, insbesondere basierend auf dem Sender-Zeitstempel, des Pakets (152), ob das Paket (152) zu dem aktuellen UID-Zyklus (170) gehört.

8. Das Verfahren gemäß einem der vorhergehenden Ansprüche,
wobei die vorbestimmte UID-Reihenfolge am Ende eines UID-Zyklus (170) mit einem weiteren UID-Zyklus wieder von vorne beginnen,
insbesondere
wobei die UIDs mittels eines Überlaufzählers generiert werden; und/oder
wobei jedes Paket (150) mittels der UID und zumindest eines Zeitstempels eindeutig identifizierbar ist.

9. Das Verfahren gemäß einem der vorhergehenden Ansprüche, aufweisend:
Feststellen, ob ein gesamter UID-Zyklus (170) verzögert und/oder verloren gegangen ist.

10. Das Verfahren gemäß einem der vorhergehenden Ansprüche,
wobei ein Internet Protokoll, IP, verwendet wird, insbesondere IPv4 und/oder IPv6.

11. Das Verfahren gemäß einem der vorhergehenden Ansprüche,
wobei Sender und Empfänger miteinander synchronisiert sind; und/oder
wobei Sender und Empfänger denselben Algorithmus, insbesondere hinsichtlich der UID-Reihenfolge, verwenden.

12. Das Verfahren gemäß einem der vorhergehenden Ansprüche,
wobei neben den Paketströmen (130) kein weiterer Datenverkehr zwischen Sender und Empfänger verwendet wird; und/oder
wobei der Datenverkehr zwischen Sender und Empfänger frei von Metadaten ist; und/oder
wobei der Empfänger frei von Informationen bezüglich des Paketstroms (130) ist.

13. Das Verfahren gemäß einem der vorhergehenden Ansprüche, aufweisend zumindest eines der folgenden Merkmale:
wobei das Verfahren im Kontext von Schienenfahrzeugen und/oder Schienen-Infrastruktur verwendet wird;
wobei die UID und/oder zumindest ein Zeitstempel eines Pakets (150) in einem Teil des IP-Headers (180) dieses Pakets (150) gespeichert ist;
wobei das Verfahren aufweist: Generieren der UID an dem Sender (110);
wobei das Verfahren aufweist: Generieren des Sender-Zeitstempels an dem Sender (110);
wobei das Verfahren aufweist: Vergleichen einer UID mit der vorhergehenden UID und/oder der nachfolgenden UID;
wobei das Verfahren aufweist: Verwenden eines Datenfluss-Identifizierers;
wobei das Verfahren aufweist: Verschlüsseln und/oder Entschlüsseln empfangener Pakete (150), insbesondere mittels eines pseudo-zufälligen Algorithmus;
wobei eine geringe Übertragungsgeschwindigkeit für den Paketstrom (130) verwendet wird;
wobei die Übertragungsgeschwindigkeit für den Paketstrom (130) basierend auf einer maximalen Verzögerung, Tmax, und/oder einer maximalen UID-Anzahl, UID_max, gesetzt wird.

14. Eine Empfänger-Vorrichtung (120), eingerichtet zum Durchführen eines Verfahrens gemäß einem der vorhergehenden Ansprüche.

15. Ein Netzwerk-System (100) aufweisend:
eine Empfänger-Vorrichtung (120) gemäß Anspruch 14; und
eine Sender-Vorrichtung (110), die mit der Empfänger-Vorrichtung (120) kommunikativ gekoppelt ist.
